(19) Europäisches Patentamt / European Patent Office / Office européen des brevets

(11) **EP 2 008 842 A2**

(12) **EUROPEAN PATENT APPLICATION**

(43) Date of publication:
**31.12.2008 Bulletin 2009/01**

(51) Int Cl.:
**B60H 1/32** (2006.01)

(21) Application number: **08159162.0**

(22) Date of filing: **27.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.06.2007 JP 2007172600**

(71) Applicant: **Calsonic Kansei Corporation Tokyo (JP)**

(72) Inventor: **Hatakeyama, Jun Nakano-ku, Tokyo 164-8602 (JP)**

(74) Representative: **Ilgart, Jean-Christophe BREVALEX 3, rue du Docteur Lancereaux 75008 Paris (FR)**

(54) **Control device and control method for air conditioning device**

(57)    A control device for an air conditioning device (6) including a variable capacity compressor (8) which has a variable capacity actuator (13), includes a full stroke control setting value computation module which is configured such that, when a capacity control output value output to the variable capacity actuator (13) is increased greater than a full stroke value which resets the variable capacity compressor (8) reaching a full stroke, and when a differential pressure that is proportional to the capacity control output value is vrtzfied to be no longer maintained, backtracks to a point of time when a differential pressure maintenance function of the variable capacity compressor (8) is lost, and computes a full stroke control setting value of the variable capacity compressor (8) that a discharge capacity of the variable capacity compressor (8) is saturated, based on the capacity control output value obtained at the point of time when the differential pressure maintenance function of the variable capacity compressor (8) is lost.

FIG.1

**Description**

BACKGROUND OF THE INVENTION

Field of the Invention

The present invention relates to a control device for an air conditioning device, which includes a variable capacity compressor having a variable capacity actuator, the variable capacity compressor being capable of maintaining a differential pressure between a discharge pressure and a suction pressure of the variable capacity compressor, or a differential pressure between the discharge pressure and a crank room pressure of the variable capacity compressor, at a differential pressure that is proportional to a capacity control output value that is output to the variable capacity actuator. In addition, the present invention relates to a control method for an air conditioning device having a variable capacity compressor.

Description of the Related Art

It is well known that in a variable capacity compressor which is employed in an air conditioning device, continuously increasing a capacity control output value which is output to a variable capacity actuator, such as a duty current value, will result in a full stroke of the variable capacity compressor that a discharge capacity of the variable capacity compressor is saturated at some point, and increasing the capacity control output value thereof beyond a full stroke value that the discharge capacity of the variable capacity compressor is saturated results in an excess drive power or an interference in a drive power estimation.
The phenomenon of overrun as a result of the saturation of the discharge capacity is referred to as a "windup phenomenon". A method of avoiding the windup phenomenon that is known involves employing a correlation equation (a map) obtained preliminarily that acquires a relation, which occurs when the discharge capacity is saturated, between an environmental information on one hand, such as an ambient temperature, an internal temperature, a vehicle speed, a quantity of ventilation, a, quantity of solar radiation, or a number of revolutions per minute (rpm) of a motor, and a target temperature of an evaporator, and a control input, to estimate a full stroke control value that the discharge capacity thereof is saturated, and using the full stroke control value thus estimated to control the discharge capacity of the variable capacity compressor. Refer, as an example thereof, to JP No. 2005-188290 A.
With respect to a control for the conventional variable capacity compressor, however, it is necessary to map the full stroke control value of the variable capacity compressor, based on such as a wide range of the environmental information, by a. bench test. which, in turn, gives rise to the following problems:

(1) it is necessary to remap the full stroke control value of the variable capacity compressor when a configuration specification of such as the discharge capacity of the compressor, or an expansion valve in a refrigeration cycle of the air conditioning device employing the variable capacity compressor, is altered; as an example thereof, if the configuration specification thereof is altered, the mapping must remapped if it is to be applicable, even if an attempt is made to apply the mapping to a different type of vehicle; and
(2) it will not be possible to treat a tolerance or a degree of deterioration on a per product basis, and an error arises in the full stroke control value of the variable capacity compressor as a consequence of a scattering of the tolerance or a deterioration overtime.

SUMMARY OF THE INVENTION

At least an object of the present invention is to provide a control device for an air conditioning device having a variable capacity compressor that is capable of acquiring a full stroke control setting value of the variable capacity compressor, with a high degree of precision, which prevents the windup phenomenon of the variable capacity compressor while eliminating the error that arises from such a factor as the alteration in the component specification of the air conditioning device, the scattering of the tolerance, or the deterioration over time. In addition, another object of the present invention is to provide a control method for an air conditioning device having a variable capacity compressor.
In light of the above, the present invention proposes, for example a control device for an air conditioning device which has a variable capacity compressor, the variable capacity compressor being provided with a variable capacity actuator and having a function that maintains a differential pressure between a discharge pressure and a suction pressure of the variable capacity compressor, or a differential pressure between the discharge pressure and a crank room pressure of the variable capacity compressor, at a differential pressure that is proportional to a capacity control output value that is output to the variable capacity actuator, the control device for the air conditioning device includes a full stroke control setting value computation module configured such that, when the capacity control output value that is output to the variable capacity actuator is increased greater than a full stroke value which results the variable capacity compressor reaching a full stroke, and when the differential pressure that is proportional to the capacity control output value is verified to be no longer maintained, backtracks to a point of time when a differential pressure maintenance function of the variable capacity compressor is lost, and computes a full stroke control setting value of the variable capacity compressor that a. discharge capacity of the variable capacity compressor ia saturated, based on the capacity control output value obtained at the point of time when the differential pressure maintenance function of the variable capacity compressor is lost.

In addition, the present invention proposes, for example a control method for an air conditioning device which has a variable capacity compressor, the variable capacity compressor being provided with a variable capacity actuator and having a function that maintains a differential pressure between a discharge pressure and a suction pressure of the variable capacity compressor, or a differential pressure between the discharge pressure and a crank room pressure of the variable capacity compressor, at a differential pressure that is proportional to a capacity control output value that is output to the variable capacity actuator. The control method for the air conditioning device, includes: backtracking to a point of time when a differential pressure maintenance function of the variable capacity compressor is lost, after verifying that the differential pressure that is proportional to the capacity control output value is no longer maintained when the capacity control output value that is output to the variable capacity actuator is increased greater than a full stroke value which results the variable capacity compressor reaching a full stroke, and computing a full stroke control setting value of the variable capacity compressor that a discharge capacity of the variable capacity compressor is saturated, based on the capacity control output value obtained at the point of time when the differential pressure maintenance function of the variable capacity compressor is lost,

According to the present invention, in the variable capacity compressor of the differential pressure control type, the differential pressure that is proportional to the capacity control output value output to the variable capacity actuator is maintained until the discharge capacity of the variable capacity compressor is saturated, and the proportional relationship between the capacity control output value and the differential pressure will be lost when the discharge capacity of the variable capacity compressor is saturated. Therefore when monitoring the differential pressure of the variable capacity compressor in the process of increase of the capacity control output value output to the variable capacity actuator of the variable capacity compressor, if the differential pressure that is proportional to the capacity control output value output to the variable capacity actuator is determined to be no longer maintained, it means that the full stroke value is exceeded. Thus the capacity control output value at the point of time when the differential pressure maintenance function of the variable capacity compressor is lost is estimated to be the full stroke control setting value that the discharge capacity of the variable capacity compressor is saturated.

Thus, the full stroke control setting value of the variable capacity compressor is computed by monitoring the differential pressure of the variable capacity compressor in the process of increase of the capacity control output value output to the variable capacity actuator of the variable capacity compressor, and a necessity for preparing a map in order to obtain the full stroke control setting value of the variable capacity compressor is eliminated. As a consequence, a necessity for remapping when the specification in the air conditioning device is altered is also eliminated. Moreover, the full stroke control setting value that is computed thereby also responds to a scattering of the tolerance, or deterioration over time of a product.

As a result, it can provide a control device and a control method for an air conditioning device having a variable capacity compressor, to acquire a full stroke control setting value of the variable capacity compressor, with a high degree of precision, and prevent the windup phenomenon of the variable capacity compressor white eliminating the error that arises from such a factor as the alteration in the component specification of the air conditioning device, the scattering of the tolerance, or the deterioration over time.

BRIEF DESCRIPTION OF THE DRAWINGS

The invention will be described further below with reference to embodiments and the accompany schematics drawings, in which:

Fig. 1 is an overall system diagram that illustrates a control device for an air conditioning device having a variable capacity compressor according to a first embodiment;
Fig. 2 is a schematic cutaway diagram that illustrates an example of the variable capacity compressor applied to the control device according to the first embodiment;
Fig. 3 is a cutaway diagram that illustrates a control valve of the variable capacity compressor applied to the control device according to the first embodiment;
Fig. 4 is a flowchart that illustrates a flow of a full stroke duty setting value computation process, which is executed in an engine control unit of the control device for the air conditioning device having the variable capacity compressor according to the first embodiment;
Fig.5 illustrates an example of a differential pressure ECV characteristic versus a duty current value of the variable capacity compressor according to the first embodiment;

Fig. 6 is a time chart illustrating each characteristic of Ps (INT), Ps (Actual), and Ps (ECV), when applying a duty current value that exceeds the full stroke value after the air conditioner is started, when a time constant of an evaporator outlet temperature sensor is one second and a change of an immediate post evaporator temperature INT is three degrees C per second;

Fig. 7 is a time chart illustrating each characteristic variation of Ps (INT), Ps (Actual), and Ps (ECV), when applying the duty current value that exceeds the full stroke value after the air conditioner is started, when the time constant of the evaporator outlet temperature sensor is three, seconds and the change of the immediate post evaporator temperature INT is one degree C per second;

Fig. 8 illustrates a relationship characteristic of a full stroke duty (%) versus engine rotational speed (rpm) on a per ambient temperature basis, of the variable capacity compressor according to the first embodiment;

Fig. 9 illustrates each characteristic of a discharge pressure Pd, compressor power, cooling performance, and a suction pressure Ps, when the engine rotational speed increases in a state that a duty value is kept greater than the full stroke value, in the variable capacity compressor according to the first embodiment; and

Fig. 10 illustrates each characteristic of a flow rate of a refrigerant, the discharge pressure Pd, the compressor power, the cooling performance, and the suction pressure Ps, when a compressor rotational speed fluctuates in a state that the duty value is kept less than or equal to the full stroke value, in the variable capacity compressor according to the first embodiment.

## DETAILED DESCRIPTION OF THE PREFERRED EMBODIMENTS

Following is a description of preferred embodiments of a control device and a control method for an air conditioning device which employs a variable capacity compressor according to an embodiment of the present invention, with reference to the attached drawings.

First Embodiment

A configuration of the control device for the air conditioning device which employs the variable capacity compressor and is applied to a vehicle according to the first embodiment is described first.

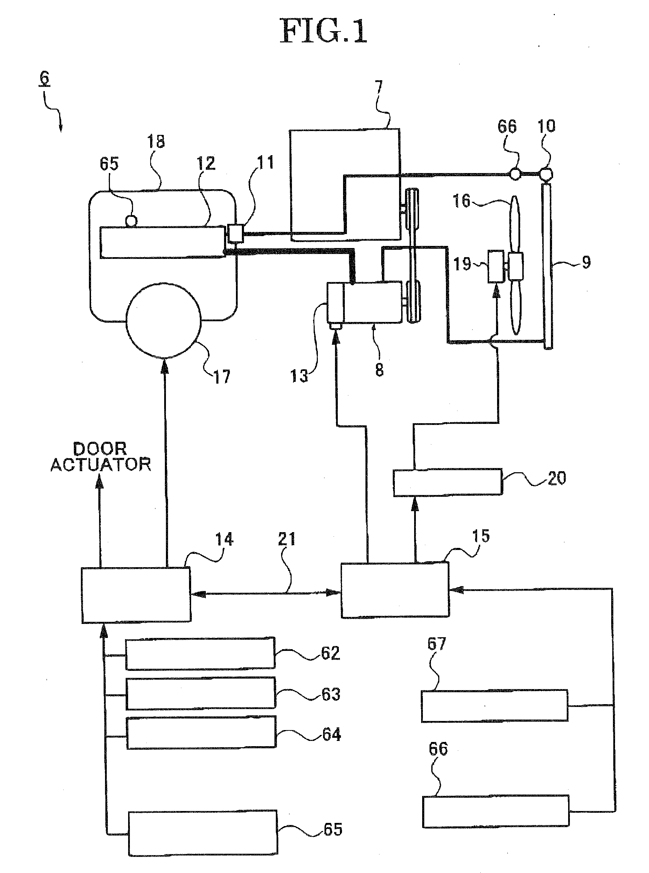

Fig. 1 is an overall system diagram that illustrates the control device for the vehicular air conditioning device 6 according to the first embodiment. The vehicular air conditioning device having a carbon dioxide ($CO_2$) refrigeration cycle, includes a variable capacity compressor 8, a condenser 9, a liquid tank 10, a temperature automatic expansion valve 11, and an evaporator 12, according to the first embodiment, as illustrated in Fig. 1.

The variable capacity compressor 8 includes an A/C (air conditioner) clutch (not shown), which is capable of switching on or off a linkage between the variable capacity compressor 8 and a rotating element of an engine 7, When the A/C clutch is switched off, the linkage between the variable capacity compressor and the rotating element of the engine 7 is disconnected, and a driving of the variable capacity compressor 8 is stopped. When the A/C clutch is switched on, the variable capacity compressor 8 is driven by a rotation of the engine 7, and a low temperature, low pressure gaseous refrigerant that is sent to the variable capacity compressor 8 from the evaporator 12 is sent from the variable capacity compressor 8 to the condenser 9 as a high temperature, high pressure gaseous refrigerant.

In addition, the variable capacity compressor 8 includes a control valve13 (a variable capacity actuator). The control valve 13 controls a discharge capacity of the refrigerant in a variable manner, by a duty current value which is an external control signal from an engine control unit 15, which, in turn, exchanges information, with an air conditioner control unit 14. A detailed description with respect to the variable capacity compressor 8 will be provided hereinafter.

The condenser 9 is positioned upon a front or a rear face of a radiator (not shown). The condenser 9 uses traveling wind or wind from an electric fan 16 to chill the high temperature, high pressure gaseous refrigerant to a condensation point, thereby changes the high temperature, high pressure gaseous refrigerant to a medium temperature, high pressure liquid refrigerant. Thereafter, the medium temperature, high pressure liquid refrigerant is sent to the liquid tank 10.

The liquid tank 10 separates out water and debris or the like contained in the medium temperature, high pressure liquid refrigerant and stores the refrigerant, so as to allow a smooth, even supply of the refrigerant. Then, the stored liquid refrigerant is sent to the temperature automatic Expansion valve 11.

The temperature automatic expansion valve 11 causes the medium temperature, high pressure liquid refrigerant to expand rapidly, and sends a resulting low temperature, low pressure liquid refrigerant in a state of mist to the evaporator 12.

The evaporator 12 evaporates the liquid refrigerant in the state of mist by draining heat from a ventilation that is sent into vehicle interior by a blower fan 17, changes the liquid refrigerant in the state of mist into the low temperature, low pressure gaseous refrigerant. The low temperature, low pressure gaseous refrigerant is thereafter sent to the variable capacity compressor 8. The evaporator 12 is built into an air conditioner unit 18 which is arranged within a dashboard of a vehicle.

The electric fan 16 is rotated by a driving force of a fan motor 19. The fan motor 19 is driven by a pulse width modulated signal obtained by modulating a motor drive voltage from the engine control unit 15 with a PWM module 20.

The blower fan 17 draws in internal and/or external atmosphere of the vehicle, by a rotational driving thereof, and sends the ventilation thus drawn in to the evaporator 12, and blows a cool wind into the vehicle interior by heat exchange. A fan motor of the blower fan 17 is driven by a drive control signal from the air conditioner control unit 14.

A control system of the air conditioning device having the variable capacity compressor according to the first embodiment includes, for example, the air conditioner control unit 14, the engine control unit 15, a bidirectional communication unit 21, a vehicle interior temperature sensor 62, an ambient temperature sensor 63 (an ambient temperature detection unit), a solar radiation sensor 64, an evaporator outlet port air temperature sensor 65 (an immediate post evaporator temperature detection unit), a high pressure sensor 66 (a discharge pressure detection unit), and an engine rotational speed sensor 67 (a compressor rotational speed detection unit) or the like.

The air conditioner control unit 14 is connected to the engine control unit 15 by the bidirectional communication unit 21. Sensor information from such as the vehicle interior temperature sensor 62, the ambient temperature sensor 63, the solar radiation sensor 64, and the evaporator outlet port air temperature sensor 65 are input into the air conditioner control unit 14. The air conditioner control unit 14 performs such as a control of the fan motor of the blower fan 17, as well as a control of a degree of opening of a door such as an air mix door or each respective mode door, based on the information that is input thereto from such as these sensors.

The engine control unit 15 is connected to the air conditioner control unit 14 by the bidirectional communication unit 21, Sensor information from such as the high pressure sensor 66 and the engine rotational speed sensor 67 are input into the engine control unit 15. The engine control unit 15 performs such as a control of a capacity of the variable capacity compressor 8, an electric fan control of the electric fan 16, an engine control, or an A/C clutch control, based on the information that is input thereto from such as the sensors that are connected to the air conditioner control unit 14, and the high pressure sensor 66.

The capacity control of the variable capacity compressor 8 performed by the engine control unit 15, is performed in a manner such as the following, as an example thereof: a computation of such as a target blowing temperature and a target blowing quantity of wind for the ventilation that is blown into the vehicle interior from the air conditioner unit 18, is made based on each value that is detected by each of various sensors and a target vehicle interior temperature that a passenger sets using a temperature adjustment dial. In such a circumstance, a target temperature of the evaporator, i.e., a target outlet port atmosphere temperature is derived, and, furthermore, a duty ratio of the variable capacity compressor 8 is computed from a difference between the target temperature of the evaporator and a detected value of an immediate post evaporator temperature. With a duty current value (a capacity control output value) having the duty ratio that is computed prior thereto, the control valve 13 controls a discharge capacity of the variable capacity compressor 8 while maintaining a differential pressure Pd (a discharge pressure of the variable capacity compressor 8) - Ps (a suction pressure of the variable capacity compressor 8) at a differential pressure that is proportional to the duty current value.

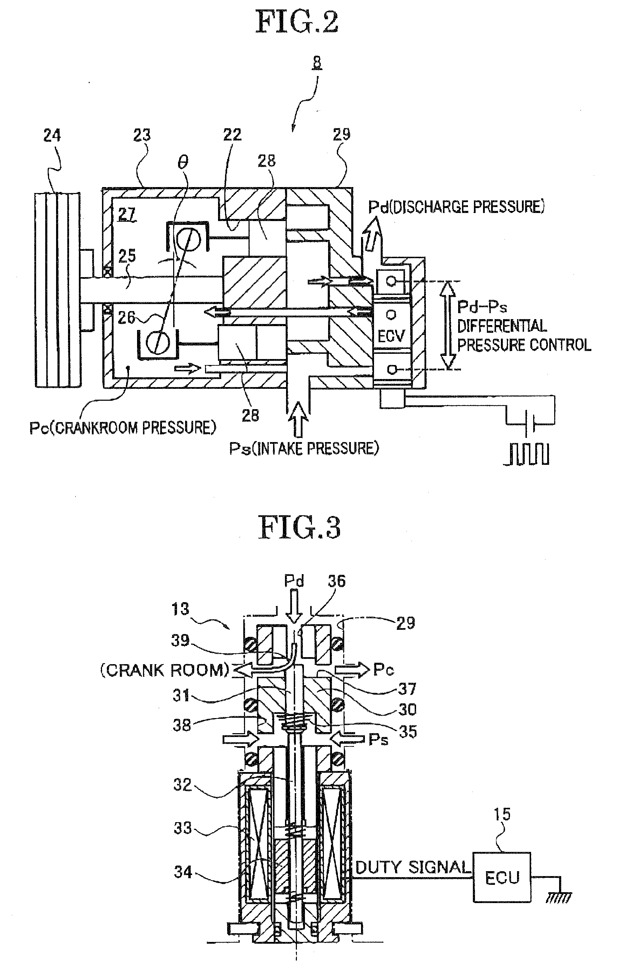

Fig. 2 is a schematic cutaway diagram that illustrates an example of a variable capacity compressor applied to the control device according to the first embodiment. Fig. 3 is a cutaway diagram that illustrates a control valve of the variable capacity compressor applied to the control device according to the first embodiment.

As illustrated in Fig. 2, the variable capacity compressor 8 includes a housing 23 provided with a plurality of cylinder chambers 22, a rotating shaft 25 which is arranged in a central location of the housing 23 and is rotated by a rotation of a pulley 24, an inclined plane 26 which is connected to the rotating shaft 25 via an inclined plane driving mechanism (not shown), a plurality of pistons 28 each of which travels a reciprocating stroke in a corresponding cylinder chamber of the plurality of cylinder chambers 22, in response to a rotation of the inclined plane 26 that is arranged in a crank room 27, and the control valve 13 which is provided in a valve case 29 that is fixed to an end surface of the bousing 23. The control valve 13 (refer to Fig. 3) controls the differential pressure (Pd - Ps) between the discharge pressure Pd and the suction pressure Ps of the variable capacity compressor 8 with the duty current value externally-applied. This results in a change in a crank room pressure Pc which, affects a back pressure of the plurality of pistons, and the pressure change thereof changes a. inclined angle θ of the inclined plane 26, and an amount of a reciprocating stroke of each of the plurality of pistons 28 is changed, and thus a discharge capacity of the $CO_2$ refrigerant is controlled,

As illustrated in Fig. 3, the control valve 13 includes a valve body 30, a first shaft 31, a second shaft 32, a coil 33, a plunger 34, and a set spring 35. The valve body 30 has a discharge pressure port 36, a crank room pressure port 37, and a suction pressure port 38, and a valve seat 39 which causes a change of the crank room pressure Pc by an opening area is formed between the first shaft 1 and the discharge pressure port 36.

Put another way, a force Pd·A that derives from the discharge pressure Pd, and a spring force Fk which is generated by the set spring 35, act upon the first shaft 31 in a downward direction in Fig. 3. In addition, a force Ps·A that derives from the suction pressure Ps, and an electromagnetic farce Fc through the plunger 34 and the second shaft 32, also act upon the first shaft 31 in an upward direction in Fig, 3. Note that A represents surface area of the first shaft 31 whereupon the pressure is received.

Accordingly, the following balanced formula is constructed:

$$(Pd \cdot A) + Fk = (Ps \cdot A) + Fc ,$$

which may be rewritten as:

$$(Pd - Ps) \cdot A = Fc - Fk \qquad\qquad (1),$$

when providing a given value as the duty current value that is applied to the coil 33, the electromagnetic force Fc, the spring force Fk, and the surface area A whereupon the pressure is received reach constant values in the equation (1), and the differential pressure (Pd - Ps) between the discharge pressure Pd and the suction pressure Ps of the variable capacity compressor 8 is maintained constant thereby. When applying a changing value as the duty current value that is applied to the coil 33 instead, the electromagnetic force Fe and the spring force Fk change, and the differential pressure (Pd - Ps) is controlled proportional to the duty current value thereby, as is evident from the equation. (1). As an example thereof, the opening area of the valve seat 39 is constricted when the electromagnetic force Fe is increased, and the crank room pressure Pc decreases, and thus the inclined angle $\theta$ of the inclined plane 26 increases, thereby the discharge capacity of the $CO_2$ refrigerant increases, In summary, the duty current value that is applied to the coil 33 affects the differential pressure (Pd - Ps), and controls the inclined angle $\theta$ of the inclined plane 26 thereby.

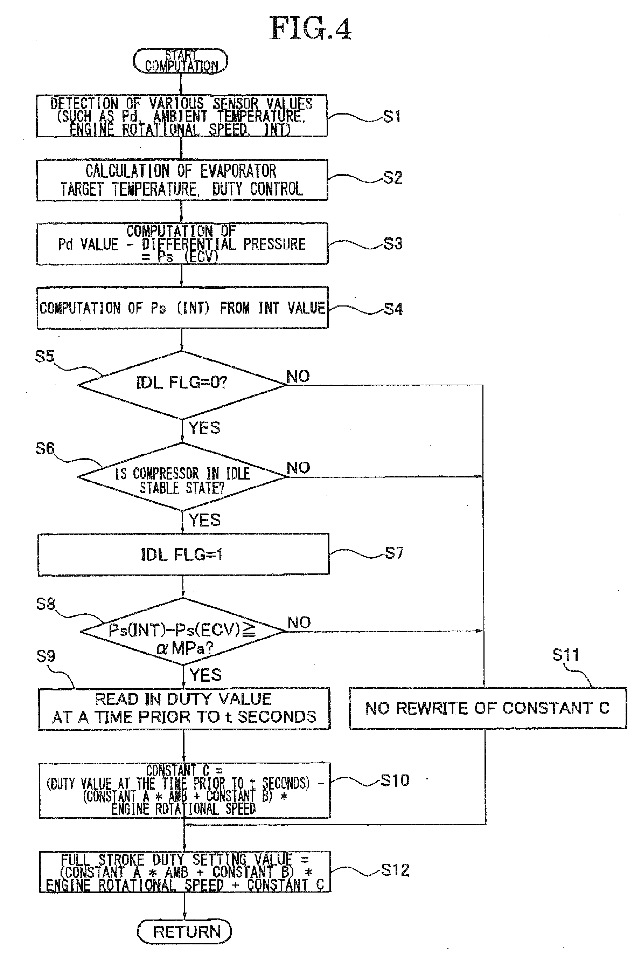

Fig. 4 is a flowchart that illustrates a flow of a full stroke duty setting value computation process, which is executed in the engine control unit 15 of the control device for the air conditioning device having the variable capacity compressor according to the first embodiment. Each respective step of the process illustrated in the flowchart in Fig, 4, and a full stroke control setting value computation module will be described hereinafter. It is to be understood that the computation process described herein commences with an ignition switch in an on position, and terminates with the ignition switch in an off position.

In step S1, various sensor values are detected, whereupon, the process proceeds to step S2,
In the present circumstance, the various sensor values each of which is detected by respective one of the various seniors, refers to such as the discharge pressure Pd that is detected by the high pressure sensor 66, an ambient temperature AMB that is detected by the ambient temperature sensor 63, an engine rotational speed Ne (= a compressor rotational speed Nc) which is detected by the engine rotational speed sensor 67, and the immediate post evaporator temperature INT that is detected by the evaporator outlet port air temperature sensor 65. as an example thereof.

Following the detection of the various sensor values by the respective various sensors in step S1, in step S2, computations of such as the target blowing temperature: and the target blowing quantity of wind for the ventilation that is blown into the vehicle interior from the air conditioner unit 18 are made based on the various sensor values and the target vehicle interior temperature that the passenger sets using the temperature adjustment dial, and the target temperature of the evaporator is calculated thereby as well. Thereafter, the duty ratio of the variable capacity compressor 8 is computed from the difference between the target temperature of the evaporator and the immediate post evaporator temperature INT, the duty current value that possesses the duty ratio thus computed is output to the coil 33 of the control valve 13 (ECV), and the process proceeds to step S3.
In the present circumstance, the duty current value is treated as rising at one percent per second, and lowering at 0.1 percent per second, as an example. In addition, a restriction imposed by a full stroke setting value is canceled only when it is determined in step S6 (to be described hereinafter) that the compressor is determined to be in an idle stable state. The restriction of the full stroke setting value applies in a circumstance other than the idle stable state.

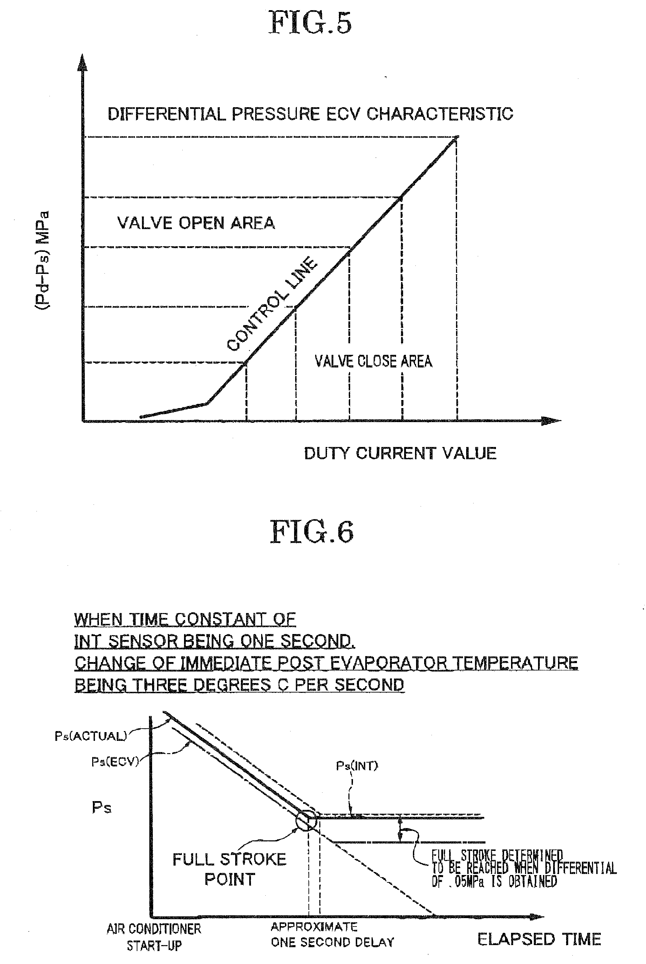

Following the calculation of the target temperature of the evaporator and the control of the duty in step S2, in step S3, by a first pressure estimation unit, a first suction pressure estimate value Ps (ECV) of the suction pressure is computed based on the duty current value that is output to the control valve 13, and the process proceeds to step S4.
In the present circumstance, the first suction pressure estimate value Ps (ECV) involves employing the duty current value that is output to the control valve 13 and a differential pressure characteristic (refer to Fig. 5) that denotes a relationship of the duty current value versus the differential pressure (Pd - Ps) to derive the differential pressure (Pd - Ps) between the discharge pressure Pd and the suction pressure Ps. The first suction pressure estimate value Ps (ECV) is thus computed by subtracting the differential pressure (Pd - Ps) from the detected value of the discharge pressure Pd.

Following the computation of the first suction pressure estimate value Ps (ECV) in step S3, in step S4, by a second pressure estimation unit, a second suction pressure estimate value Ps (INT), which corresponds to an actual suction pressure, is computed based on a saturation effect information of the discharge capacity, and the process proceeds to step S5.

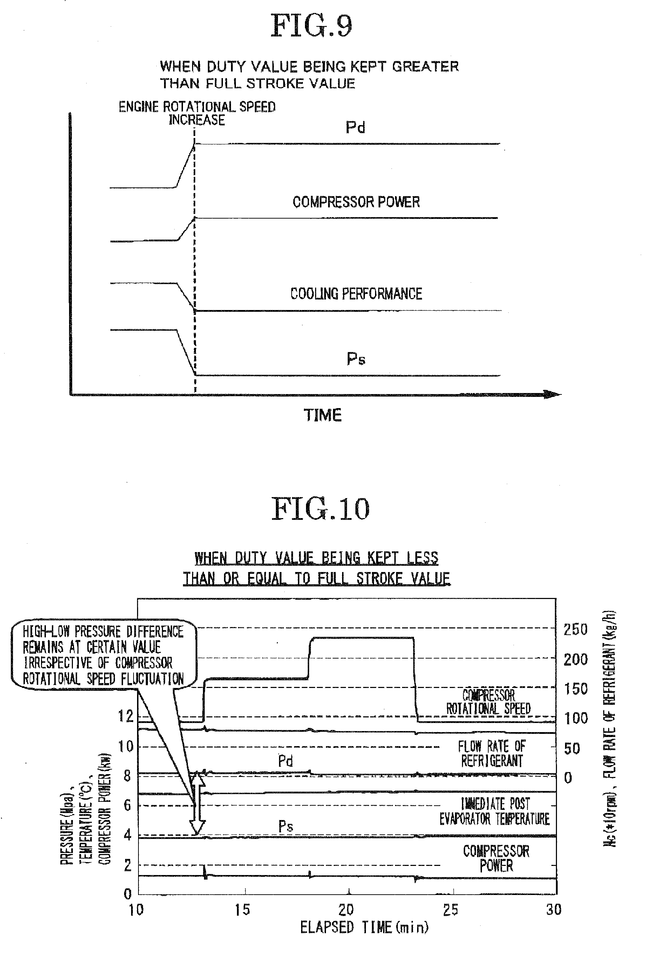

In the present circumstance, a detected value of the immediate post evaporator temperature INT and a suction pressure characteristic that denotes a relationship of the immediate post evaporator temperature INT versus the suction pressure Ps is employed to compute the second suction pressure estimate value Ps (INT). The relationship of the immediate post evaporator temperature INT versus the suction pressure Ps denotes a proportion characteristic (a suction pressure characteristic), such that the value of the immediate post evaporator temperature INT is in line with the suction pressure Ps, such as is illustrated in Fig. 10. As a consequence thereof, the second suction pressure estimate value Ps (INT) is computed by multiplying a pressure conversion coefficient with the immediate post evaporator temperature INT.

Following the computation of the second suction pressure estimate value Ps (INT) in step S4, in step S5, by a compressor stability operation condition determination unit, a determination is made as to whether or not an IDLFLG which signifies a presence or an absence of an experience of an idle stable state of the variable capacity compressor, is IDLFLG = 0. If the determination in step S5 is "YES," i.e., the experience of the idle stable state of the variable capacity compressor is not present, the process proceeds to step S6, whereas, if the determination in step S5 is "NO," i.e., the experience of the idle stable state of the variable capacity compressor is present, the process proceeds to step S11.

Following the determination in step S5 that the IDLFLG = 0, in step S6, by a. compressor stability operation condition determination unit, a determination is performed as to whether or not the compressor is in the idle stable state. If a result of the determination thereof is "YES,", i.e., the variable capacity compressor is in the idle stable stats, the process proceeds to step S7, whereas, if the determination in step S6 is "NO," i.e., the variable capacity compressor is in a state other than the idle stable state, the process proceeds to step S11.

In the present circumstance, the idle stable state is determined when the engine rotational speed is in an idle rotational speed range and a state of the engine rotation being within the idle rotational speed range is sustained for a set period of time, for example, one minute. The idle rotational speed range is a state that the engine rotational speed, i.e., the compressor rotational speed, is at the minimum, and is a condition that the variable capacity compressor 8 is most likely to reach the full stroke, i.e., a condition that the discharge capacity thereof is most likely to be maximized. In addition, sustaining thereof on the order of one minute is treated as a determination of the stability thereof.

Following the determination in step S6 that the compressor is in the idle stable state, in step S7, the IDLFLG, which signifies the presence or the absence of the experience of the idle stable state, is rewritten to IDLFLG = 1, i.e., the experience of the idle stable state is present, and the process proceeds to step S8.

Following the rewriting of the IDLFLG to IDLFLG = 1 in step S7, in step S8, by a pressure estimate value comparison unit, a determination is made as to whether or not a value that the first suction pressure estimate value Ps (ECV) is subtracted from the second suction pressure estimate value Ps (INT) is greater than or equal to a set pressure value $\alpha$MPa. If the determination thereof is "YES," i.e., Ps (INT) - Ps (ECV) $\geq$ $\alpha$MPa, the process proceeds to step 59, whereas, if the determination thereof is "NO," i.e., Ps (INT) - Ps (ECV) < $\alpha$MPa, the process proceeds to step S11.

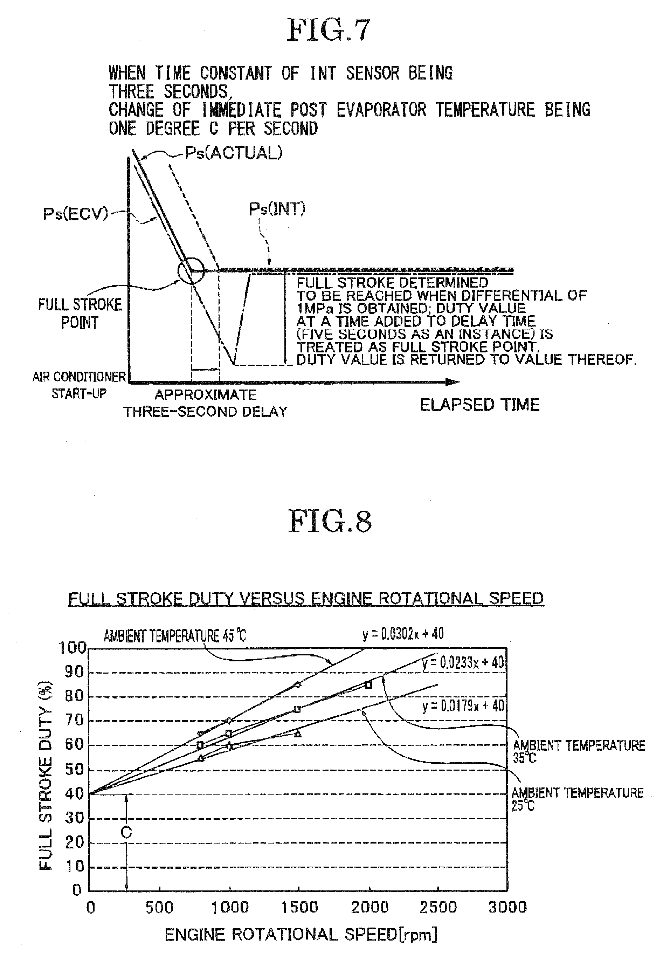

In the present circumstance, the set pressure value $\alpha$MFa is set to a value, for example, one MPa, that exceeds an error that arises from a delay in a response that is caused by a time constant of the evaporator outlet port air temperature sensor 65, refer to Fig. 7 for particulars. A reason thereof is that the evaporator outlet port air temperature sensor 65 experiences the delay in response that is caused by the time constant that is possessed by the sensor, and the delay thereof results in a discrepancy of four to five degrees C, or 0.5 to 0.6 MPa when converting from temperature to pressure, if the set pressure value $\alpha$MPa be small, the determination accuracy is low and therefore an error of the full stroke duty setting value increases,

Following the determination in step S8 that Ps (INT) - Ps (ECV) $\geq$ $\alpha$MPa, in step S9, by a full stroke control value setting unit, a duty current value at a time prior to a. backtracking set time t (in seconds) from the determination point of time in step S8, is read, whereupon the process proceeds to step S10.

In the present circumstance, the backtracking set time t is a time whereto it is backtracked from the point of time when it is determined that Ps (INT) - Ps (ECV) $\geq$ $\alpha$MPa, to a time of a full stroke point when a differential begins to arise between the first suction pressure estimate value Ps (ECV) and the actual suction pressure Ps, and is set to, for example, five seconds which is added to a delay in response caused by the time constant of the evaporator outlet port air temperature sensor 65 (for example, three seconds), refer to Fig. 7 for particulars.

In addition, the duty current value at the time prior to the backtracking set time t possesses a meaning of a full stroke duty setting value that the discharge capacity of the variable capacity compressor 8 is saturated in an environment condition (such as the ambient temperature or the compressor rotational speed) at that point of time.

Following the reading of the duty current value at the time prior to the backtracking set time t in step S9, in step S10, by a constant rewrite unit, a constant C which is the full stroke duty setting value when the compressor rotational speed is zero in a full stroke duty setting value characteristic, is computed by the following equation:

$$\text{Constant C} = (\text{Duty Current Value at a Time Prior to Backtracking Set Time t}) - (A \times AMB + B) \times Ne$$

wherein AMB represents a detected value of the ambient temperature AMB at the time prior to the backtracking set time t, Ne represents a detected value of the engine rotational speed Ne at the time prior to the backtracking set time t, and A and B are constants. The constant C thus computed is rewritten to a constant C that is previously set and stored in a memory thereof, and the process proceeds to step S12.

In the present example, a full stroke duty setting value characteristic that denotes a relationship of the engine rotational speed Ne, i.e., the compressor rotational speed, versus the full stroke duty setting value, is preset in the memory in a form that only the constant C as a target for an rewrite correction thereof, by a full stroke control setting value characteristic setting unit, such as is illustrated in Fig. 8,

Following the determination of "NO" in step S5, or the determination of "NO'" in step S6, or the determination of '"NO'' in step S8, in step S11, the constant C that is the full stroke duty setting value when the compressor rotational speed is zero m the full stroke duty setting value characteristic, is not rewritten, and the process proceeds to step S12.

With the constant C rewritten in step S10, or the constant C not being rewritten in step S11, in step S12, by a full stroke duty setting value computation unit, the full stroke duty setting value is computed, using the following equation;

$$\text{Full Stroke Duty Setting Value} = (A \times AMB + B) \times Ne + C$$

wherein A and B are constants, represents the value of the ambient temperature AMB that is detected at the present time, and Ne represents the value of the engine rotational speed Ne at the present time. Upon the computation thereof of the full stroke duty setting value, the process proceeds to a return step.

Put another way, the variable capacity compressor 8 performs the control of the discharge capacity with the full stroke duty setting value that is determined in step S12 as an upper limit value thereof.

Following is a description of a history whereby the present invention was arrived at.

The use of carbon dioxide ($CO_2$) as a refrigerant has a long history. The application thereof is seen primarily in ships. As a natural refrigerant that is used in air conditioning, $CO_2$ is neither flammable nor toxic, and possesses a coefficient of ozone damage of zero and a greenhouse gas coefficient of one, signifying its environmental friendliness. $CO_2$ is also an economical refrigerant, given that it is generated as a byproduct of chemical synthesis.

Applying a $CO_2$ refrigerant to a refrigeration cycle, however, requires an operating pressure that is three times that required for a conventional air conditioner refrigerant: 9 megapascals (MPa), (approximately 90 atmospheres). The development of a compressor with a high efficient at a high pressure is thus a crucial issue with respect to the application of the $CO_2$ refrigerant to the refrigeration cycle.

Furthermore, it is already known that, when applying the variable capacity compressor as the compressor, continuously increasing a capacity control output value which is output to a variable capacity actuator of the variable capacity compressor, for example, the duty current value, will result in a full stroke of the variable capacity compressor that the discharge capacity of the variable capacity compressor reaching saturated at some point, and that increasing the capacity control output value beyond a full stroke value that the full stroke is reached results in an excess drive power or an interference in a drive power estimation.

The phenomenon of overrun as a result of the saturation of the discharge capacity is referred to as a "windup phenomenon". $A_5$ an example, in a variable capacity compressor of a differential pressure control type with an engine drive, when the duty value that is greater than the full stroke value is applied and contained, the increase in the engine rotational speed results in an increase in the discharge pressure Pd of the variable capacity compressor, and a decrease in the suction pressure Ps of the variable capacity compressor, such as is illustrated in Fig. 9. Thus, the differential pressure (Pd - Ps) grows, instead of being a certain value, and the compressor power increases as wall. In such a circumstance, not only does the cooling performance decline, but the discharge pressure Pd increases ss well. In summary, the increase in the discharge pressure Pd with the refrigeration cycle that employs the $CO_2$ refrigerant necessitates a pressure countermeasure that is capable of withstanding an even higher pressure that results from an operating pressure that results of necessity from the high pressure thereof

In contrast thereto, a conventionally proposed method of avoiding the windup phenomenon involves, in any case, employing a map that is created in advance by a bench test, and predicting the full stroke duty setting value. The following problems arise as a consequence thereof, however: (1) it is necessary to remap the full stroke control value when a configuration specification of such as the discharge capacity of the compressor, or an expansion valve in a refrigeration cycle of the air conditioning device, is altered; and (2) an error arises in the full stroke control value as a consequence of a scattering of a tolerance or a deterioration over time. As an example thereof, if the configuration specification thereof is altered, the mapping must remapped if it is to be applicable, even if an attempt is made to apply the mapping to a different type of vehicle.

Put another way, a demand exists for a system to be developed which is capable of

a) establishing the full stroke duty setting value with a high degree of precision, by using a simple technique, which is capable of being applied with ease to a different type of vehicle; and b) is capable of reliably avoiding the windup phenomenon.

In light of the above, the present invention has focused upon a circumstance wherein, when using the variable capacity compressor of the differential pressure control type in the air conditioning device, the proportional relationship of the differential pressure that is proportional to the capacity control output value which is output to the variable capacity actuator of the variable capacity compressor is lost when the discharge capacity of the variable capacity compressor is saturated. According to the point of the focus thereof, a configuration is adopted wherein, upon verifying that the differential pressure that is proportional to the capacity control output value can no longer be maintained, when monitoring the differential pressure in a process of increase of the capacity control output value thereof, dating back from the verification time point to a point of time when the differential pressure maintenance function is lost, i.e., a full stroke point, the capacity control output value at the full stroke point is employed as a full stroke control setting value, Adopting the configuration thereof allows building an optimal map that is applied to each system in the computation processing process, as well as facilitating acquiring a full stroke control setting value, with a high degree of precision, that prevents the windup phenomenon while -eliminating the error that arises from such a factor as the alteration in the component specification, the scattering of the tolerance, or the deterioration over time.

Following is a description of operations in the air conditioning device.

Following is a description that segments operations of the control device for the air conditioning device having the variable capacity compressor according to the first embodiment into: a) an operation of computing the full stroke duty setting value when the compressor is not in the idle stable state; b) an operation of computing the full stroke duty setting value when the compressor is determined to be in the idle stable state: c) an operation of computing the full stroke duty setting value after experiencing the idle stable state; d) a method of deriving the full stroke point; e) an equation for computing the full stroke duty setting value; and f) advantages of computing the full stroke duty setting value.

Operation of Computing the Full Stroke Duty Setting Value When the Variable Capacity Compressor Not being in the Idle Stable State

When the variable capacity compressor is not in the idle stable state, a flow from step S1 to step S2 to step S3 to step S4 to step S5 to step S6 to step S11 to step S12 in the chart illustrated in Fig, 4 is repeated.

Put another way, the constant C is not rewritten in step S11, i.e. the constant C is the one set at previous time, when the compressor is determined to be in the idle stable state, and in step S12, the full stroke duty setting value is computed, using the following equation:

$$\text{Full Stroke Duty Setting Value} = (A \times AMB + B) \times Ne + C$$

wherein A and B are constants, AMB represents the value of the ambient temperature AMB that is detected at the present time, and Ne represents the value of the engine rotational speed Ne at the present time.

With the duty control in step S2, the control is performed with the full stroke duty setting value as the upper limit value thereof. Put another way, the control is performed such that, when a computed duty current value is less than or equal to the full stroke duty setting value, the computed duty current value is output, whereas, when the computed duty current value exceeds the full stroke duty setting value, the full stroke duty setting value is output instead of the computed duty current value.

Operation of Computing Full Stroke Duty Setting Value when the Variable Capacity Compressor is In Idle Stable State

When the variable capacity compressor is determined to be in the idle stable state, the flow in the flowchart illustrated in Fig, 4 proceeds as follows: step S1 to step S2 to step S3 to step S4 to step S5 to step S6 to step S7 to step S8, and while it is determined in step S8 that. Ps (INT) - Ps (ECV) < nMPA, the process proceeds thereafter from step S8 to step S11 to step S12.

Thereafter, when the condition Ps (INT) - Ps (ECV) $\geq \alpha$MPa is satisfied in step S8, the process instead proceeds thereafter from step S8 to step S9 to step S10. In step S10, the constant C, which is the full stroke duty setting value when the compressor rotational speed is zero in the full stroke duty setting value characteristic, is computed by the following equation:

$$\text{Constant C} = (\text{Duty Current Value at a Time Prior to Backtracking Set Time t}) - (\text{A} \times \text{AMB} + \text{B}) \times \text{Ne}$$

wherein AMB represents the detected value of the ambient temperature AMB at the time prior to the backtracking set time t, Ne represents the detected value of the engine rotational speed Ne at the time prior to the backtracking set time t, and A and B are constants. The computed constant C then is rewritten to the constant C that is previously set and stored in a memory thereof.

Thereafter, the process proceeds from step S10 to step S12, wherein the full stroke duty setting value is computed, using the following equation:

$$\text{Full Stroke Duty Setting Value} = (\text{A} \times \text{AMB} + \text{B}) \times \text{Ne} + \text{C}$$

wherein 4 and B are constants, C represents the constant C that is rewritten, AMB represents the value of the ambient temperature AMB that is detected at the present time, and Ne represents the value of the engine rotational speed Ne at the present time.

Operation of Computing Full Stroke Duty Setting Value alter Experiencing Idle Stable State

When the idle stable state has been experienced, in step 57, the IDLFLG which signifies the presence or the absence of the experience of the idle stable state, is rewritten to IDLFLG = 1, i.e., the experience of the idle stable state is present. Accordingly, after the idle stable state has been experienced, a flow from step S1 to step S2 to step S3 to step S4 to step S5 to step S11 to step S12 in the flowchart illustrated in Fig. 4 is repeated.

Put another way, the full stroke duty setting value is computed, using the following equation:

$$\text{Full Stroke Duty Setting Value} = (\text{A} \times \text{AMB} + \text{B}) \times \text{Ne} + \text{C}$$

wherein A and B are constants, C represents the constant C that is already rewritten in this computation processing, AMB represents the value of the ambient temperature AMB that is detected at the present time, and Ne represents the value of the engine rotational speed Ne at the present time.

Once it is determined that the compressor is in the idle stable state, i.e., the determination in step S6 is "YES," the process thereafter proceeds to step S11 that the constant C is not rewritten, without determining the presence or absence of the idle stable state in step S5. The reason for doing so is to avoid the windup phenomenon in an effective manner, by keeping the outputting of the duty current value that exceeds the full stroke during a single power off cycle to a maximum of one time, whils maintaining the rewriting of the constant C.

Method of Deriving the Full Stroke Point

First the variable capacity compressor 8 of the differential pressure control type maintains the differential pressure (Pd - Ps), which increases in proportion to the output of the duty current value to the control valve 13, when the discharge capacity is not saturated, such as is illustrated in Fig. 5. In addition, as an example, when the discharge pressure Pd is staying constant, and the discharge capacity is saturated, increasing the duty current value that is output to the control valve 13 until the discharge capacity is saturated causes the suction pressure Ps to decrease in proportion thereto, thus maintaining the proportional relationship between the duty current value and the differential pressure (Pd - Ps). Up to the full stroke point that the discharge capacity is saturated, however, a flat characteristic which is in line with the discharge pressure Pd appears, and without the suction pressure Ps decreasing, and thus the proportional relationship between the duty current value and the differential pressure (Pd - Ps) is tost.

Accordingly, verifying that the differential pressure (Pd - Ps) that is proportional to the duty current value can no longer be maintained, when monitoring the differential pressure (Pd - Ps) in a process of increase of the duty current value, means that the duty current value is already exceeding the full stroke value. As a consequence thereof, dating back to a point of time when the differential pressure maintenance function is lost, i.e., the full stroke point, it is possible to estimate that the duty current value at the full stroke point is the full stroke duty setting value wherein the discharge capacity is saturated.

An existing system, however, does not have a sensor set thereupon that detects the suction pressure Ps, even though the high pressure sensor 66 that detects the discharge pressure Pd is provided thereupon. Thus, according to the first embodiment, a method is adopted of employing the existing sensor to detect the full stroke point, in a rough sense, after starting the air conditioner, in a process of increasing the duty current value that is output to the control valve 13 (ECV). Put another way, according to the first embodiment, the first suction pressure estimate value Ps (ECV), which is based on the duty current value that is output to the control valve 13 (ECV), and the second suction pressure estimate value Ps (INT), which is based on the immediate post evaporator temperature INT, cure employed,

When the duty current value that is output to the control valve 13 increases, the first suction pressure estimate value Ps (ECV) is derived based on the duty current value that is output to the control valve 13, and, as a consequence thereof, a characteristic is exhibited that decreases in proportion to the increase of the duty current value, regardless of the saturation of the discharge capacity.

On the other hand, when the duty current value that is output to the control valve 13 increases, the second suction pressure estimate value Ps (INT) is derived based on the information of the immediate post evaporator temperature of the evaporator 12, and, as a consequence thereof, a characteristic is exhibited that maintains a constant value up to the full stroke point when the discharge capacity is saturated.

In summary, a differential arises between the second suction pressure estimate value Ps (INT) and the first suction pressure estimate value Ps (ECV), with the full stroke point as a boundary thereof, and the differential arising therebetween grows in accordance with the increase of the duty current value. As a consequence thereof, a value that the first suction pressure estimate value Ps (ECV) is subtracted from the second suction pressure estimate value Ps (INT) is determined, to be greater than or equal to the set pressure value αMPa, and it is further determined thereby that the duty current value is already in excess of the full stroke value.

A delay in a response which is caused by the time constant of the evaporator outlet port air temperature sensor 65, however, is present between a speed of the increase of the duty current value, and a speed of the decrease, of the immediate post evaporator temperature INT from the evaporator outlet port air temperature sensor 65, and if the delay in the response thereof is ignored, an error in the detection of the full stroke point will result. Following is a description, with reference to Fig. 6 and Fig. 7, as to how, as a consequence thereof, the set pressure value αMPa and the set time t are determined, taking into account an effect of the time constant of the evaporator outlet port air temperature senior 65.

[0058] - When the Time Constant of the Evaporator Outlet Port Air Temperature Sensor 65 Is One Second, and the Change of the Immediate Post Evaporator Temperature INT Is Three Degrees Per Second:

In the present circumstance, such as is illustrated in Fig. 6, the delay of the evaporator outlet port air temperature sensor 65 is a discrepancy of one to two degrees C (0.2 to 0.3MPa, when converting from temperature to pressure), and the determination thereof is an easy one to make, because the error therein is very small. Accordingly, setting a determination value of Ps (INT) - Ps (ECV) = 0.5MPa or thereabouts allows determining the full stroke point. It is difficult for the windup phenomenon to occur at a value of 0.5MPa.

[0059] - When the Time Constant of the Evaporator Outlet Port Air Temperature Sensor 65 Is Three Seconds, and the Change of the immediate Past Evaporator Temperature INT Is One Degree Per Second:

In the present circumstance, such as is illustrated in Fig. 7, the delay of the evaporator outlet port air temperature sensor 65 is a discrepancy of four to five degrees C (0.5 to 0.6MPa, when converting from temperature to pressure). The error grows large as a result thereof, and precision is not achievable as a consequence. Accordingly, setting the determination value of Ps (INT) - Ps (BCV) = 1MPa or thereabouts, and setting a time, five seconds as an example, that adds to the time constant, allows determining the full stroke point. It is to be understood that, given that the windup phenomenon occurs at a value of 1MPa, the duty current value is promptly returned to the full stroke duty setting value when a differential of 1MPa obtains.

Equation for Computing Full Stroke Duty Setting Value

Plotting the full stroke duty derived from a result of the bench test, makes clear an illustration of a characteristic that depends upon the compressor rotational speed and the ambient temperature, such as is illustrated in Fig. 8. Ths characteristic is proportional to the compressor rotational speed, and a slope thereof is proportional to the ambient temperature.

A mathematical formulation thereof is as follows:

$$\text{Slope} = 0.0006 \times \text{Ambient Temperature} + 0.0023$$

$$\text{Intercept} = 40\ (\%)$$

Accordingly, the equation for ths full stroke duty setting value is as follows:

$$\text{Full Stroke Duty Setting Value} = (0.0006 \times \text{AMB} + 0.0023) \times \text{Engine Rotational Speed} + 40$$

$$= (A \times \text{AMB} + B) \times \text{Engine Rotational Speed} + C$$

The equation fluctuates according to the compressor discharge capacity and the characteristics of the expansion valve. In the present example, however, only the slope based on the values of the constant A and the constant B changes, in response to a target pressure control, and thus, it is possible to use the equation by a minor correction, i.e., determining the constant C by the rewrite process according to the first embodiment. In addition, when no variation is present in the compressor discharge capacity and the expansion valve characteristics, the slope based on the values of the constant. A and the constant B is unchanged, and thus, it is possible to use the equation with a minor correction, i.e., determining the constant C by the rewrite process according to the present invention. The reason thereof is that a physical target pressure of $CO_2$ is invariant, the compressor discharge pressure and the target pressure control of the expansion valve are logically derived, and the control is performed with the values thus derived as the target thereof.

In any such circumstance, the rewrite process that makes the minor correction of the value of the constant C, which is the slops of the preceding equation allows an application with ease to another type of vehicle, and a treatment as a characteristic in response to the degree of the scattering of the tolerance and the deterioration over time on the per product basis.

Advantage of Computing Full Stroke Duty Setting Value
When the full stroke duty setting value is not computed, the increase of the engine rotational speed when in a state that the duty current value is kept greater than the full stroke value, the discharge pressure Pd increases, the suction pressure Ps decreases, and the differential pressure therebetween grows without reaching the certain value, even the duty current value is kept constant, such as is illustrated in Fig. 9. When the differential pressure fluctuates thereby, the compressor power increases, and the cooling performance decreases.

In response thereto, it is possible to fix the duty current value less than or equal to the full stroke value, when the full stroke duty setting value is computed. When in a state that the duty current value is kept less than or equal to the full stroke value, it is possible to maintain the differential pressure (Pd - Ps) of the discharge pressure Pd and the suction pressure Ps of the variable capacity compressor, irrespective of the fluctuation of the compressor rotational speed (the engine rotational speed), even if the compressor rotational speed (the engine rotational speed) increases in a staged manner, such as is illustrated in Fig. 10. It is further possible to maintain the quantity of the flow of the refrigerant (the quantity of the flow of discharge), and the compressor power, at certain values. It is thus easy to estimate the compressor power and a torque thereof, even if the compressor rotational speed fluctuates.
It is further possible to maintain the immediate post evaporator temperature INT at a certain value even if the compressor rotational speed fluctuates, and in particular, if the duty current value is set to match the full stroke duty setting value, it is possible to draw out a maximum level of performance as well.

In the control device for the air conditioning device 6 having the variable capacity compressor 8 according to the first embodiment of the present invention, which is employed as a component of the refrigeration cycle of the air conditioning device 6 including the evaporator 12, the variable capacity compressor 8 having the function that maintains the differential pressure between the discharge pressure Pd and the suction pressure Ps of the variable capacity compressor 8, or the differential pressure between the discharge pressure Pd and the crank room pressure Pc of the variable capacity compressor 8, at the differential pressure that is proportional to the duty current value that is output to the control valve 13 of the variable capacity compressor 8, the full stroke control setting value computation module (refer to Fig. 4) is provided therewithin which, when the duty current value that is output to the control valve 13 is increased greater than the full stroke value that results the variable capacity compressor 8 reaching the full stroke, and when the differential pressure that is proportional to the duty current value that is output to the control valve 13 is verified to be no longer maintained, backtracks to the point of time when the differential pressure maintenance function of the variable capacity compressor 8 is lost, and computes the full stroke control setting value that the discharge capacity is saturated based on the duty current value obtained at the point of time when the differential pressure maintenance function is lost.
As a consequence of the provision of the full stroke control getting value computation module therewithin, it can acquire tbs full stroke control setting value, with a high degree of precision, that prevents the windup phenomenon, while eliminating the error that arises from such a factor as the alteration in the component specification, the scattering of the tolerance, or the deterioration over time.

The full stroke control setting value computation module includes the first suction pressure estimation unit, which derives the first suction pressure estimate value Ps (ECV) based on the duty current value that is output to the control valve 13, the second suction pressure estimation unit, which derives the second suction pressure estimate value Ps (INT) based on the saturation effect information of the discharge capacity, the compressor stability operation condition determination unit, which determines whether or not the variable capacity compressor 8 is sustained for a set period of time in the predetermined rotational speed state, the pressure estimate value comparison unit, which compares the first suction pressure estimate value Ps (ECV) with the second suction pressure estimate value Ps (INT), when the duty current value that is output to the control valve 13 is increased and when a condition for a stable operation, of the compressor is satisfied, and, a. full stroke duty setting unit which is configured such that, if the pressure estimate value comparison unit determines that the differential pressure of the second suction pressure estimate value Ps (INT) and the first suction pressure estimate value Ps (ECV) is greater than or equal to the set pressure value $\alpha$MPa, dates back to a point of time thereby when a d1fserential pressure of the first suction pressure estimate value Ps (ECV) and the actual suction pressure $P_5$ begins to emerge, and sets the duty current value at that point of time as a full stroke duty value that the discharge capacity of the variable capacity compressor is saturated under an environment condition at the point of time when the differential pressure of the first suction pressure Ps (ECV) and the actual suction pressure Ps begins to emerge.

As a consequence thereof, the first suction pressure estimate value Ps (ECV) and the second suction pressure estimate value Ps (INT) are employed, and the differential pressure thereof is monitored, rather than directly monitoring the differential pressure (Pd - Ps), and it can thereby to verity with ease that the duty current value that is output to the control valve 13 reaches a value greater than the full stroke value.

The engine rotational speed sensor 67, which detects the drive rotational speed of the variable capacity compressor 8, the ambient temperature sensor 63, which detects the ambient temperature, and the full stroke duty setting value characteristic setting unit, which sets the full stroke duty setting value characteristic that denotes the relationship of the full stroke duty setting value versus the ambient temperature AMB and the engine rotational speed, are provided, and the full stroke control setting value computation module includes the constant value rewrite unit, which employs the full stroke duty value that is set by the full stroke duty value setting unit, the detected value of the ambient temperature AMB by the ambient temperature sensor 63, and the detected value of the engine rotational speed by the engine rotational speed sensor 67, to rewrite the constant C, which is the full stroke duty value that is set when the engine rotational speed is zero in the full stroke duty setting value characteristic.

As a consequence thereof, a minor correction process that is rewriting the constant C allows building an optimal full stroke duty setting value characteristic that eliminates errors that arise from such as a scattering of a tolerance and a deterioration over time.

The full stroke control setting value computation module includes the full stroke duty setting value computation unit, which computes the full stroke duty setting value, when is treated as the detected value of the ambient temperature, and C is treated as a constant of the full stroke control setting value characteristic versus the value of the engine rotational speed Ne, using the following equation:

$$\text{Full Stroke Duty Setting Value} = (A \times AMB + B) \times Ne + C$$

wherein A and B are constants, AMB represents the detected value of the ambient temperature AMB, and Ne represents the value of the engine rotational speed Ne. In the variable capacity compressor 8, the discharge capacity control is performed with the full stroke duty setting value that is determined by the full stroke duty setting value computation unit, as the upper limit value.

As a consequence thereof, it can reliably avoid a windup phenomenon when performing the discharge capacity control, as well as prevent an excess drive power or interference in drive power estimation.

The high pressure sensor 66, which detects the discharge pressure Pd of the variable capacity compressor 8, and the evaporator outlet port air temperature sensor 65, which detects an immediate post evaporator temperature of the evaporator 12, are provided. The first suction pressure estimation unit, employs the differential pressure characteristic that denotes a relationship between the duty current value and the differential pressure (Pd - Ps) to derive a differential pressure (Pd - Ps) of the discharge pressure Pd and the suction pressure Ps, and computes the first suction pressure estimate value Ps (ECV) by subtracting the derived differential pressure (Pd - Ps) from the detected value of the discharge pressure Pd. The second suction pressure estimation unit, employs the detected value of the immediate post evaporator temperature INT and the suction pressure characteristic that denotes a relationship of the suction pressure versus the immediate post evaporator temperature INT to compute the second suction pressure estimate value Ps (INT).

As a consequence thereof, it can compute the first suction pressure estimate value Ps (ECV) and the second suction pressure estimate value Ps (INT) which are computation information, while achieving a lowered cost by employing the evaporator outlet port air temperature sensor 65 and the high pressure sensor 66, which are already present in the refrigeration cycle.

The pressure estimate value comparison unit sets the set pressure value $\alpha$MPa, which compares with the pressure estimate value differential, i.e., Ps (INT) - Ps (ECV), to a value that exceeds an error that arises from a delay in a response caused by a time constant of the evaporator outlet port air temperature sensor 65. The full stroke duty value setting unit sets the backtracking set time t to the full stroke point when the differential of the first suction pressure estimate value Ps (ECV) and the actual suction pressure Ps begins to emerge, to a time that adds the delay in the response that is caused by the time constant of the evaporator outlet port air temperature sensor 65.

As a consequence thereof, while employing the evaporator outlet port air temperature sensor 65 that possesses the delay in the response caused by the time constant, it can set a highly precise full stroke duty value at the full stroke point which takes the delay in the response into account.

Once the determination is experienced, after the commencement of the computation of the full stroke duty setting value that the stable compressor operation, condition has been satisfied, the compressor stability operation condition, determination unit, determines thereafter, until the computation of the full stroke duty setting value is terminated, that the stable compressor operation condition is not satisfied.

As a consequence thereof, it can keep a frequency of outputting of the duty current value that exceeds the full stroke to a minimum by permitting at a maximum only one time of an operation of rewriting of the constant C during a single power off cycle.

The evaporator 12 is arranged in an air conditioner unit 18 of the air conditioning device 6, and the air conditioning device includes the evaporator 12 and the variable capacity compressor 8, in addition, the air conditioning device includes a $CO_2$ refrigeration cycle, which employs the carbon dioxide refrigerant as a refrigerant thereof.

As a consequence thereof, it can acquire full stroke control information that reliably avoids the windup phenomenon, which interferes with the pressure and the performance, in an air conditioning system that employs the $CO_2$ refrigeration cycle, where a development of a compressor with highly efficient under high pressure is a crucial issue.

It should be noted that although the present invention has been described with respect to exemplary embodiments, the invention is not limited thereto. In view of the foregoing, it is intended that the present invention cover modifications and variations provided they fall within the scope of the following claims and their equivalent.

In the first embodiment, the suction pressure estimate value differential (Ps (INT) - Ps (ECV)) was compared, and a verification made that the differential pressure that is proportional to the capacity control output value could not be maintained, an example in which, instead, the first suction pressure estimate value Ps (BCV) and an actual suction pressure Ps are employed, and a differential pressure (Ps - Ps (FCV)) is compared, and the verification made thereby that the differential pressure that is proportional to the capacity control output value could not be maintained, would be possible as well.

In addition, an example in which, when employing a variable capacity compressor of a differential pressure (Pd - Pc) control type, a comparison is made of a crank room pressure estimation value differential (Pc (INT) - Pc (ECV)), or of a differential pressure (Pc

- Pc (ECV)), and the verification made thereby that the differential pressure that is proportional to the capacity control output value could not be maintained, would be possible as well.

Furthermore, it would also be possible to monitor a change characteristic in the actual suction pressure Ps or an actual crank room pressure Pc, verify by a change in a slope bounded by the full stroke point that the differential pressure that is proportional to the capacity control output value could not be maintained, and derive the duty current value at the point of time of the full stroke point that is an inflection point of the slope.

In essence, the present invention is not restricted to the first embodiment, as long as it is provided with a full stroke control setting value computation module which, when a capacity control output value that is output to the variable capacity compressor is increased greater than a full stroke value, verifies that it is no longer capable of maintaining the differential pressure that is proportional to the capacity control output value, backtracks to a point of time when the differential pressure maintenance function is lost, and computes a full stroke control setting value that the discharge capacity is saturated based on the capacity control output value obtained at the point of time when the differential pressure maintenance function is lost.

In the first embodiment, an example of an application to an air conditioning device provided with a variable capacity compressor of a differential pressure (Pd-Ps) control type is explained, it would be possible to apply the present invention to an air conditioning device provided with a variable capacity compressor of a differential pressure (Pd - Pc) control type as well. In addition, whereas an example of an application to a $CO_2$ refrigeration cycle is explained according to the first embodiment, that it would be possible to apply the present invention to a refrigeration cycle that employs a refrigerant aside from the $CO_2$ refrigerant as the refrigerant thereof as well goes without saying. Furthermore, whereas an example of an application to a vehicular air conditioning unit is explained according to the first embodiment, it would be possible to apply the present invention to such as household air conditioning unit or a business or industrial air conditioning unit as well.

In essence, the present invention is applicable if a control device for an air conditioning device having a variable capacity compressor is employed as a component of a refrigeration cycle that has an evaporator, and the control device for the air conditioning device having the variable capacity compressor includes a function that maintains a differential pressure between a discharge pressure and a suction pressure, or a differential pressure between the discharge pressure and a crank room pressure, at a differential pressure that is proportional to a capacity control value that is output to a variable capacity actuator.

The entire contents of Japanese patent application No. JP 2007-172600, filed on June 29, 2007, of which the convention priority is claimed in this application, are incorporated hereinto by reference.

**Claims**

1.  A control device for an air conditioning device (6), which includes a variable capacity compressor (8) having a variable capacity actuator (13), the variable capacity compressor (8) being capable of maintaining a differential pressure (Pd-Ps) between a discharge pressure (Pd) and a suction pressure (Ps) of the variable capacity compressor (8), or a differential pressure (Pd-Pc) between the discharge pressure (Pd) and a crank room pressure (Pc) of the variable capacity compressor (8), at a. differential pressure that is proportional to a capacity control output value that is output to the variable capacity actuator (13), comprising:
a full stroke control setting value computation module,
wherein the full stroke control setting value computation module is configured such that, when the capacity control output value that is output to the variable capacity actuator (13) is increased greater than a full stroke value which results the variable capacity compressor (8) reaching a full stroke, and when the differential pressure that is proportional to the capacity control output value is verified to be no longer maintained, backtracks to a point of time when a differential pressure maintenance function of the variable capacity compressor (8) is lost, and computes a full stroke control setting value of the variable capacity compressor (8) that a discharge capacity of the variable capacity compressor (8) is saturated, based on the capacity control output value obtained at the point of time when the differential pressure maintenance function of the variable capacity compressor (8) is lost.

2.  The control device for the air conditioning device (6) according to claim 1. wherein the full stroke control setting value computation module includes:

    a first pressure estimating unit (15) configured to derive a first pressure estimate value (Ps(ECV)) of the suction pressure (Ps) or the crank room pressure (Pc) of the variable capacity compressor (8), based on the capacity control output value that is output to the variable capacity actuator (13);
    a. second pressure estimating unit (15) configured to derive a second pressure estimate value (Ps(INT)) that corresponds to an actual suction pressure or an actual crank room pressure of the variable capacity compressor (8), based on a saturation effect information of the discharge capacity of the variable-capacity compressor (8);
    a compressor stability operation condition determination unit (15) configured to determine whether or not the variable capacity compressor (8) is sustained in a predetermined rotational speed state for a set period of time,
    a pressure estimate value comparison unit (15) configured to compare the first pressure estimate value (Ps(ECV)) with the second pressure estimate value (Ps(INT)), when the capacity control output value that is output to the variable capacity actuator (13) is increased and when a condition for a stable operation of the compressor (8) is satisfied; and
    a full stroke control value setting unit (15),

    wherein, the full stroke control value setting unit (15) is configured such that, when the pressure estimate value comparison unit (15) determines that the differential pressure (Ps(INT)-Ps(ECV)) of the second pressure estimate value and the first pressure estimate value is greater than or equal to a set pressure value, dates back to a point of time when a differential pressure of the first pressure estimate value (Ps(ECV)) and the actual suction pressure (Ps) or the actual crank room pressure (Pc) begins to emerge, and sets the capacity control output, value obtained at the point of time when the differential pressure of the first pressure estimate value (Ps(ECV)) and the actual suction pressure (Ps) or the actual crank room pressure (Pc) begins to emerge as a full stroke control value that the discharge capacity of the variable capacity compressor (8) is saturated under an environment condition at the point of time when the differential pressure of the first pressure estimate value (Ps(ECV)) and the actual suction pressure (Ps) or the actual crank room pressure (Pc) begins to emerge.

3.  The control device for the air conditioning device according to claim 2, further comprising:

    a compressor rotational speed detection unit (67) configured to detect a drive rotational speed of the variable capacity compressor (8);
    an ambient temperature detection unit (63) configured to detect an ambient temperature (AMB); and

a full stroke control setting value characteristic setting unit (15) configured to set a full stroke control setting value characteristic: that denotes a relationship of the full stroke control setting value versus the ambient temperature (AMB) and the compressor rotational speed,

wherein the full stroke control setting value computation module further includes a constant value rewrite unit (15) configured to employ the full stroke control value that is set by the full stroke control value setting unit (15), a value of the ambient temperature (AMB) that is detected by the ambient temperature detection unit (63), and a value of the compressor rotational speed that is detected by the compressor rotational speed detection unit (67), to rewrite a constant (C) that is a full stroke control setting value when the compressor rotational speed is zero in the full stroke control setting value characteristic.

4. The control device for the air conditioning device (6) according to claim 3, wherein the full stroke control setting value computation module further includes a full stroke control setting value computation unit (15) configured to compute the full stroke control setting value, using the following equation:

$$\text{Full Stroke Control Setting Value} = (A \times AMB + B) \times Nc + C$$

wherein A and B are constants, AMB represents the value of the ambient temperature detected, and C represents the constant of the full stroke control setting value characteristic versus the compressor rotational speed that is represented as Nc, and
wherein in the variable capacity compressor (8), a control of the discharge capacity is performed with the full stroke control setting value determined by the full stroke control setting value computation unit (15) as an upper limit value.

5. The control device for the air conditioning device (6) according to any one of claims 2 claim 4, the air conditioning device (6) further including an evaporator (12),
wherein the control device for the air conditioning device (6) further comprises:

a discharge pressure detection unit (66) configured to detect the discharge pressure (Pd) of the variable capacity compressor (8); and
an immediate post evaporation temperature detection unit (65) configured to detect a temperature immediately after the evaporator,

wherein the first pressure estimating unit (15) employs the capacity control output value that is output to the variable capacity actuator (13) and a differential pressure characteristic that denotes a relationship of the capacity control output value that is output to the variable capacity actuator (13) versus the differential pressure (Pd-Ps) between the discharge pressure (Pd) and the suction pressure (Ps) of the variable capacity compressor (8), to derive a differential pressure (Pd-Ps) between the discharge pressure (Pd) and the suction pressure (Ps), and to compute a first suction pressure estimate value (Ps(ECV)) by subtracting the derived differential pressure (Pd-Ps) from the detected value of the discharge pressure (Pd) of the variable capacity compressor (8), and
wherein the second pressure estimating unit (15) employs a detected value of the immediate post evaporator temperature and a auction pressure characteristic that denotes a relationship of the suction pressure (Ps) of the variable capacity compressor (8) versus the immediate post evaporator temperature to compute a second suction pressure estimate value (Pa(INT)).

6. The control device for the air conditioning device (6) according to claim 5, the air conditioning device (6) further including an evaporator (12),
wherein the pressure estimate value comparison unit (15) sets the set pressure value which compares with the differential pressure (Ps(INT)-Ps(ECV)) of the second suction pressure estimate value (Ps(INT)) and the first suction pressure estimate value (Ps(ECV)), to a value that exceeds an error that arises from a delay in a response caused by a time constant of the immediate post evaporation temperature detection unit (65), and
wherein the full stroke control value setting unit (15) sets a backtracking set time to a full stroke point when a differential of the first suction pressure estimate value (Ps(ECV)) and the actual suction pressure (Ps) begins to emerge, to a time that adds the delay in the response caused by the time constant of the immediate post evaporation temperature detection unit (65).

7. The control device for the air conditioning device (6) according to any one of claims 2 to 6, wherein the compressor stability operation condition determination unit (15) determines, once the determination is experienced after the commencement of the computation of the full stroke control setting value that the stable compressor operation condition has been satisfied, until the computation of the full stroke control setting value is terminated, that the stable compressor operation condition is not satisfied.

8. The control device for the air conditioning device (6) according to any one of claims 1 claim 7, wherein an evaporator (12) is built into an air conditioner case of the air conditioning device (6), and
   wherein the air conditioning device (6) includes a carbon dioxide refrigeration cycle which employs a carbon dioxide refrigerant as a refrigerant.

9. A control method for an air conditioning device (6), which includes a variable capacity compressor (8) having a variable capacity actuator (13), the variable capacity compressor (8) being capable of maintaining a differential pressure (Pd-Ps) between a discharge pressure (Pd) and a suction pressure (Ps) of the variable capacity compressor (8), or a differential pressure (Pd-Pc) between the discharge pressure (Pd) and a crank room pressure (Pc) of the variable capacity compressor (8), at a differential pressure that is proportional to a capacity control output value that is output to the variable capacity actuator (13), comprising:

   backtracking to a point of time when a differential pressure maintenance function of the variable capacity compressor (8) is lost, after verifying that the differential pressure that is proportional to the capacity control output value is no longer maintained when the capacity control output value that is output to the variable capacity actuator (13) is increased greater than a full stroke value which results the variable capacity compressor (8) reaching a full stroke, and
   computing a full stroke control setting value of the variable capacity compressor (8) that a discharge capacity of the variable capacity compressor (8) is saturated, based on the capacity control output value obtained at the point of time when the differential pressure maintenance function of the variable capacity compressor (8) is lost

# FIG.1

DOOR
ACTUATOR

# FIG.2

24  23  θ  22  28  29
27
25
26

Pd(DISCHARGE PRESSURE)

Pd-Ps
DIFFERENTIAL
PRESSURE CONTROL

ECV

Pc(CRANKROOM PRESSURE)
28
Ps(INTAKE PRESSURE)

# FIG.3

Pd  36
13
39
(CRANK ROOM)
31
38
32
33
34

29
Pc
37
30
35
Ps

DUTY SIGNAL  ECU  15

# FIG.4

```
                    ┌────────────────┐
                    │     START      │
                    │  COMPUTATION   │
                    └───────┬────────┘
                            ↓
        ┌──────────────────────────────────────────┐
        │  DETECTION OF VARIOUS SENSOR VALUES       │──S1
        │  (SUCH AS Pd, AMBIENT TEMPERATURE,        │
        │   ENGINE ROTATIONAL SPEED, INT)           │
        └───────────────────┬──────────────────────┘
                            ↓
        ┌──────────────────────────────────────────┐
        │  CALCULATION OF EVAPORATOR                │──S2
        │  TARGET TEMPERATURE, DUTY CONTROL         │
        └───────────────────┬──────────────────────┘
                            ↓
        ┌──────────────────────────────────────────┐
        │         COMPUTATION OF                    │──S3
        │  Pd VALUE - DIFFERENTIAL PRESSURE         │
        │            = Ps (ECV)                     │
        └───────────────────┬──────────────────────┘
                            ↓
        ┌──────────────────────────────────────────┐
        │  COMPUTATION OF Ps (INT) FROM INT VALUE   │──S4
        └───────────────────┬──────────────────────┘
```

S5 — IDL FLG=0? — NO

YES

S6 — IS COMPRESSOR IN IDLE STABLE STATE? — NO

YES

S7 — IDL FLG=1

S8 — $Ps(INT) - Ps(ECV) \geqq \alpha$ MPa? — NO

YES

S9 — READ IN DUTY VALUE AT A TIME PRIOR TO t SECONDS

S11 — NO REWRITE OF CONSTANT C

S10 — CONSTANT C = (DUTY VALUE AT THE TIME PRIOR TO t SECONDS) - (CONSTANT A * AMB + CONSTANT B) * ENGINE ROTATIONAL SPEED

S12 — FULL STROKE DUTY SETTING VALUE = (CONSTANT A * AMB + CONSTANT B) * ENGINE ROTATIONAL SPEED + CONSTANT C

RETURN

# FIG.5

DIFFERENTIAL PRESSURE ECV CHARACTERISTIC

VALVE OPEN AREA

CONTROL LINE

VALVE CLOSE AREA

(Pd-Ps) MPa

DUTY CURRENT VALUE

# FIG.6

WHEN TIME CONSTANT OF
INT SENSOR BEING ONE SECOND.
CHANGE OF IMMEDIATE POST EVAPORATOR TEMPERATURE
BEING THREE DEGREES C PER SECOND

Ps(ACTUAL)

Ps(ECV)

Ps(INT)

Ps

FULL STROKE
POINT

FULL STROKE DETERMINED
TO BE REACHED WHEN DIFFERENTIAL
OF .05MPa IS OBTAINED

AIR CONDITIONER
START-UP

APPROXIMATE
ONE SECOND DELAY

ELAPSED TIME

# FIG.7

WHEN TIME CONSTANT OF INT SENSOR BEING
THREE SECONDS,
CHANGE OF IMMEDIATE POST EVAPORATOR TEMPERATURE BEING
ONE DEGREE C PER SECOND

Ps(ACTUAL)

Ps(ECV)

Ps(INT)

FULL STROKE
POINT

FULL STROKE DETERMINED
TO BE REACHED WHEN DIFFERENTIAL OF
1MPa IS OBTAINED; DUTY VALUE
AT A TIME ADDED TO DELAY TIME
(FIVE SECONDS AS AN INSTANCE) IS
TREATED AS FULL STROKE POINT.
DUTY VALUE IS RETURNED TO VALUE THEREOF.

AIR CONDITIONER
START-UP

APPROXIMATE
THREE-SECOND DELAY

ELAPSED TIME

# FIG.8

## FULL STROKE DUTY VERSUS ENGINE ROTATIONAL SPEED

AMBIENT TEMPERATURE 45 ℃

$y = 0.0302x + 40$

$y = 0.0233x + 40$

$y = 0.0179x + 40$

AMBIENT TEMPERATURE
35℃

AMBIENT TEMPERATURE
25℃

C

FULL STROKE DUTY (%)

ENGINE ROTATIONAL SPEED[rpm]

# FIG.9

WHEN DUTY VALUE BEING KEPT GREATER
THAN FULL STROKE VALUE

# FIG.10

WHEN DUTY VALUE BEING KEPT LESS
THAN OR EQUAL TO FULL STROKE VALUE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005188290 A
- JP 2007172600 A